Europäisches Patentamt

European Patent Office

Office européen des brevets

(11) Publication number: **0 275 575 B1**

# EUROPEAN PATENT SPECIFICATION

(45) Date of publication of patent specification: **09.10.91**

(51) Int. Cl.⁵: **B60R 16/02, B60R 13/06**

(21) Application number: **87202265.2**

(22) Date of filing: **19.11.87**

(54) Guide for an electric wiring.

(30) Priority: **23.12.86 NL 8603265**

(43) Date of publication of application:
**27.07.88 Bulletin 88/30**

(45) Publication of the grant of the patent:
**09.10.91 Bulletin 91/41**

(84) Designated Contracting States:
**DE FR GB IT NL SE**

(56) References cited:
**DE-A- 3 435 566**
**FR-A- 2 475 469**
**GB-A- 2 152 124**

(73) Proprietor: **Volvo Car B.V.**
**Steenovenweg 1**
**NL-5708 HN Helmond(NL)**

(72) Inventor: **Janssen, Johannes Martinus Paulus**
**Nachtegaallaan 9**
**NL-5741 KA Beek en Donk(NL)**

(74) Representative: **Timmermans, Anthonius**
**C.Th., Ir. et al**
**European Patent Attorneys Octrooibureau**
**Zuid P.O. Box 2287**
**NL-5600 CG Eindhoven(NL)**

Rank Xerox (UK) Business Services

## Description

The invention relates to a guide for electric wires, which guide is provided on a hinged rear window of a motor vehicle and which guide has a U-shaped sectional strip to guide the wires, the U-shaped sectional strip having legs and an open side, whereby one of the legs of the shaped sectional strip is fixed to the side of the window near its circumference.

Such a guide is known from GB-A-2 152 124, which provides a moulding with a channel mounted near the periphered edge outside of the rear window. The channel contains wires for the supply of electric power current consuming apparatus mounted in the rear hatch of the vehicle.

Electric wirings of this kind are necessary for controlling several functions such as rear window demisting, windscreen wiping, lighting and the like. The wire bundle necessary for this is difficult to provide because each separate wire must be passed to the outside through a hole in the body and be fitted in or on the window. Furthermore care must be taken during use that it must be possible for the wires to follow the movement of the hinged window and that they do not get wedged between the window and the sealing strips and the like.

The invention provides a solution for these problems and it is characterized in that the open side of the U-shaped sectional strip is directed inwards, and in that electric wires are passed through an opening in the body and directed into a first leg of a substantially L-shaped guide piece, and in that said L-shaped guide piece comprises a second leg which is inserted into said sectional strip through an opening and in that the wires fed into the guide piece are arranged to lie in a plane substantially parallel to the rear window.

The guide piece according to the invention is preferably made by glueing the wires therein together and then spraying a plastic material of the like around it.

In explanation of the invention a description of a preferential embodiment of the invention will be given hereinafter with reference to a drawing, in which:

Fig. 1 is a perspective view of a part of a motor vehicle with an open rear window and the guide construction according to the invention;

Fig. 2 is a detailed front view of the wire guide piece;

Fig. 3 is a side view of said guide piece; and

fig 4 is a sectional view of the rear window construction with a mounted wire guide.

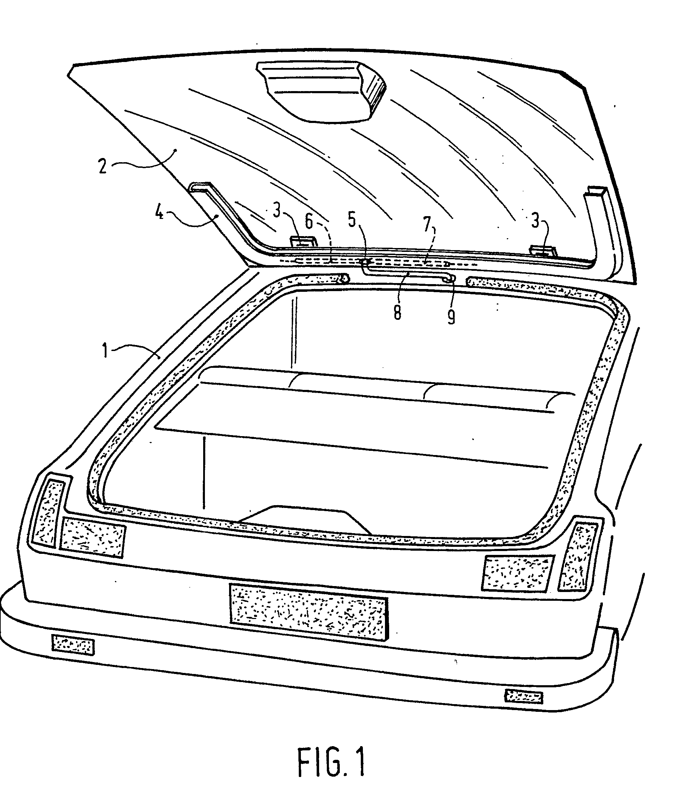

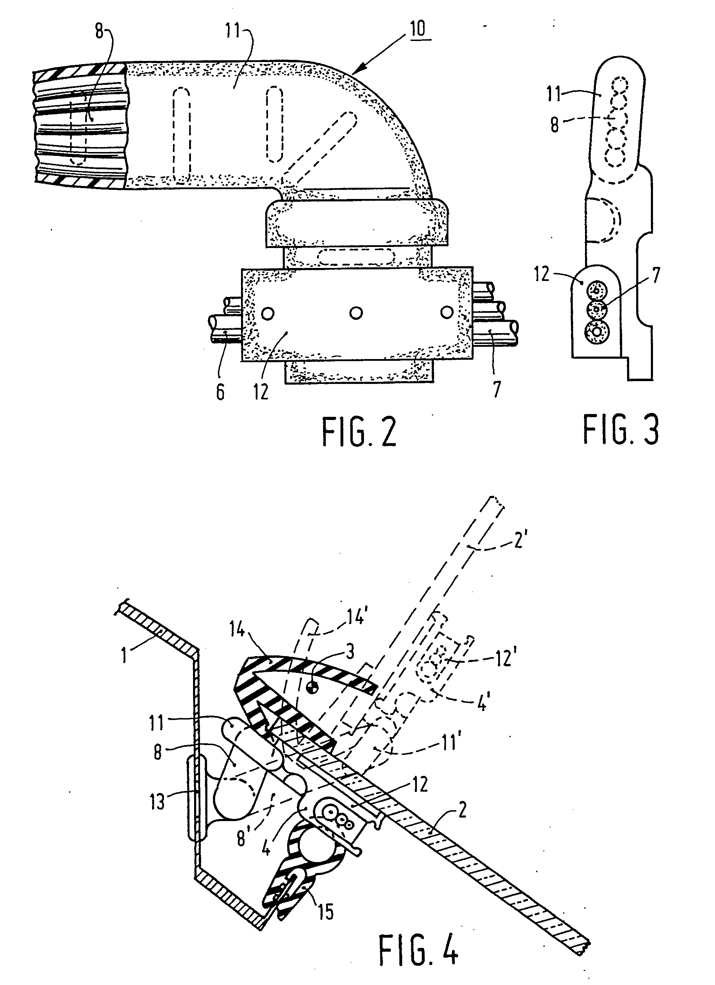

In figure 1 reference number 1 indicates the rear part of the body of a motor vehicle and 2 illustrates a frameless rear window which is connected to the body with hinges 3. To the rear window there is furthermore fixed a sectional strip 4 having a U-shaped section which bears against the window 2 with one of its legs and is directed inwards with its open end. The sectional strip 4 follows the outer circumference of the window 2. In the sectional strip 4, at 5, there is provided an opening through which the two branches 6 and 7 of a wire bundle 8 that meet there are passed outside. The bundle 8 is then passed inside at 9 through an opening in the body. The wire bundle 8 allows a certain twist on opening and closing. In the opening 5 there is provided a guide piece 10 which is illustrated in detailed front view in fig 2 and in side view in fig 3. Said guide piece consists of a part 11 which projects from the bottom of the sectional strip after fitting and a part 12 which is inserted into the U-shaped space of the strip 4 through the opening 5. The wire bundle 8 is located in the part 11 and said bundle is accommodated in the part 12 in two bundles 6 and 7 having opposite directions. The bundle 8 is led between the part 11 and a hole 13 in the body, as figs 1 and 4 illustrate. Fig 4 furthermore illustrates how the situation is when the rear window 2 is in the open position (indicated by dotted lines) and in the closed position (continuous line). The reference numbers for the open positions are provided with accent-marks. Said figures furthermore illustrate the sealing strips 14 and 15 respectively.

The guide piece 10 is made by first glueing together the wires of the bundles 8, 6 and 7 respectively in a template and then spraying a plastic material around these bundles. The unit thus obtained is quite easy to fit and effectively prevents separate wires from getting loose or wedged.

## Claims

1. Guide for electric wires (6, 7, 8) which guide is provided on a hinged rear window (2) of a motor vehicle and which guide has a U-shaped sectional strip (4) to guide the wires (6, 7), the U-shaped sectional strip (4) having legs and an open side, whereby one of the legs of the U-shaped sectional strip (4) is fixed to the side of the window near its circumference, characterized in that the open side of the U-shaped sectional strip (4) is directed inwards and in that electric wires (6, 7, 8) are passed through an opening (9) in the body and directed into a first leg of a substantially L-shaped guide piece (10), and in that said L-shaped guide piece (10) comprises a second leg (12) which is inserted into said sectional strip (4) through an opening (5) and in that the wires fed into the guide piece are arranged to lie in a plane substantially parallel to the rear window (2).

2. Guide piece for a guide according to claim 1, characterized in that the electric wires therein are glued together preparatory to a plastic material or the like being sprayed around it.

**Revendications**

1. Guide pour câbles électriques (6,7,8) qui est prévu sur une vitre arrière articulée (2) d'un véhicule motorisé et qui possède une bande profilée en forme de U (4) pour guider les câbles (6,7), la bande profilée en U (4) comportant des pattes et un côté ouvert de manière que l'une des pattes de la bande profilée en forme d'U (4) soit fixée sur le côté de la vitre près de sa circonférence caractérisé en ce que le côté ouvert de la bande profilée en forme d'U (4) est dirigé vers l'intérieur et en ce que des câbles électriques (6,7,8) passent au travers d une ouverture (9) dans la carrosserie et sont dirigés dans une première patte d'une pièce de guidage (10) ayant sensiblement la forme d'un L, et en ce que ladite pièce de guidage (10) en forme de L comprend une seconde patte (12) qui est introduite dans ladite bande profilée (4) au travers d'une ouverture (5) et en ce que les câbles amenés dans la pièce de guidage sont disposés de façon à être situés dans un plan sensiblement parallèle à la vitre arrière (2).

2. Pièce de guidage pour un guide selon la revendication 1 caractérisée en ce que les câbles électriques qui y sont disposés sont préalablement collés ensemble sur un matériau plastique ou similaire qui est pulvérisé autour d'eux.

**Patentansprüche**

1. Führung für elektrische Drähte (6, 7, 8), die an einer scharnierenden Heckscheibe (2) eines Kraftfahrzeugs angebracht wird und die einen U-förmigen Profilstreifen (4) zur Führung der Drähte (6, 7) aufweist, wobei der U- förmige Profilstreifen (4) Schenkel und eine offene Seite hat, und wobei einer der Schenkel des U- förmigen Profilstreifens (4) auf der Seite in Höhe des Umfangsrands an der Seite der Scheibe befestigt ist, dadurch gekennzeichnet, daß die offene Seite des U-förmigen Profilstreifens (4) nach innen gewendet ist und daß elektrische Drähte (6, 7, 8) durch eine Öffnung (9) im Körper in einem ersten Schenkel eines nahezu L-förmigen Führungsteils (10) geführt sind, daß der L-förmige Führungsteil (10) einen zweiten Schenkel (12) umfaßt, der durch eine Öffnung (5) in dem Profilstreifen hindurchgesteckt ist, und daß die in dem Führungsteil geführten Drähte in einer Ebene liegen, die sich nahezu parallel zu der Heckscheibe (2) erstreckt.

2. Führungsteil für eine Führung nach Anspruch 1, dadurch gekennzeichnet, daß die elektrische Drähte in dem Führungsteil zusammengeleimt sind, bevor Kunststoff oder ein ähnliches Material um die Drähte gespritzt wird.

FIG.1

FIG. 2

FIG. 3

FIG. 4